# EUROPEAN PATENT SPECIFICATION

(11) **EP 0 654 563 B1**
(45) Date of publication and mention of the grant of the patent: **04.02.1998**
(21) Application number: 94203337.4
(22) Date of filing: 16.11.1994
(51) Int. Cl.: E01F 9/011, F16B 7/02, E04H 12/22

(54) **Post and means to anchor it in the ground, for example to prevent the parking of vehicles**
Strassenleitpfosten und Sockelteil, zum Beispiel zum Sperren von Fahrzeugparken
Poteau et moyens pour son ancrage dans le sol, par exemple pour l'interdiction de stationnement de véhicules

(30) Priority: 18.11.1993 NL 9301994
(43) Date of publication of application: 24.05.1995
(73) Proprietor: Minck, Lodewijk Petrus Maria, NL-2181 VG Hillegom (NL)
(72) Inventor: Minck, Lodewijk Petrus Maria, NL-2181 VG Hillegom (NL)
(74) Representative: Bakker, Gilles Egbert, Ir.

(56) References cited:
- EP-A- 0 169 463
- EP-A- 0 189 962
- WO-A-93/12312
- AU-D- 6 082 273
- CH-A- 384 611
- DE-A- 3 226 449
- FR-A- 2 695 419
- US-A- 3 945 743

## Description

The invention relates to a post and means to anchor it in the ground, for example to prevent the parking of vehicles, resilient means being present between the anchoring means and the post so that from the vertical position the post can bring about a certain angular displacement when a force in approximately horizontal direction is applied thereon, such as by a vehicle colliding with it, and the post will return from this position to its vertical position once the force on the post has been removed.

Such a post is known from NL-A-9102035. This known post is made of concrete and a reinforcement bar accommodated therein has at its lower end been connected to a cable. Said cable runs downward through a passage into a foundation block and has at its lower end been connected to a threaded end onto which a nut has been screwed. A strip, which is accommodated in a cavity of the block, rests upon the nut.

Between the strip and the upper wall of the cavity, resilient means are located such as those in the shape of a rubber sleeve which is compressed between the upper wall and the strip. By turning the nut the elastic sleeve can be brought on the pre-stress desired.

Such a construction is elaborate and heavy, as a result of which its manufacture and installation will be relatively expensive. As the resilient means are continually under strain, the resilient force produced by them will decrease in time. Readjustment of the desired strain can only be effected by excavating the entire foundation block. The resilient means being located in the ground, it will be subject to ageing.

Furthermore, when a vehicle collides with the post, not only will a tilting motion be applied to the post, it will also be subject to a force in horizontal direction. As a result the cable may be urged against the upper edge of the passage in the foundation block and may be damaged and even break.

The invention now aims at removing said disadvantages and provides to this end that the post has been made hollow and that within the post a coil spring has been placed the upper end of which is anchored to the post and the lower end to a virtually horizontally oriented plate that is part of the anchoring means, and which plate has been provided with a standing rim which has been fittingly inserted in the lower end of the post.

The post may be constructed of metal as well as plastic material and can be considerably lighter than a post made of concrete, nonetheless possessing sufficient strength. Due to the rim attached to the anchoring means and to a small length inserted upward into the post, the post will not shift but will only be able to tilt when a horizontal force is exerted on the post.

It has been found that use can be made of a coil spring the windings of which are accommodated close together and which allows for the windings still being adjoined in the mounted position of the post.

Therefore, the spring need not actually be under pre-stress but only needs to be placed tightly against the attaching points. The spring being located completely above the anchoring means allows, if need be, for an easy replacement of the spring and of the post.

The connection between the upper end of the spring and the post will in particular be achieved by a pin transversely brought into the post, which has been grasped by an eye-part of the coil spring and which pin has an approximate V-shape such that the spring will be drawn toward the centre of the V.

As a result the upper end of the spring will always be located roughly in the middle of the post, also from the moment of the post being brought in a tilted position.

In accordance with an embodiment of the invention it can be provided that, the anchoring means contains a tube, a rod attached to the outside thereof and winded in a spring-coil shape, some windings of which continue below the lower end of the tube, a receiving part mounted at the upper end of the tube for the sliding but not rotating accomodating of a clamping piece that with its upper end can be drawn against the plate by means of a bolt and therewith is wedged in the receiving part.

In this respect it should be pointed out that anchoring a post in the ground with the use of a tube to be screwed into the ground, is known per se from EP-B-0 189 962.

Due to the rod winded around the tube, the tube can be easily screwed into the ground without the need of digging a hole. For extracting the tube upwards from the ground a force of some hundreds of kilograms is required so that vandalism need not be feared.

In order to facilitate screwing the tube into the ground, the upper end of the tube may be provided with a rectangular or square part which can be grasped by a tool.

The rectangular part may be obtained in that the receiving part connected to the tube may be formed by a square tube the upper end of which projects above the tube.

Here, the clamping piece may be formed by: a sleeve slidable in the receiving part, the upper end of which may adjoin the plate and the lower end has obliquely been cut off; a slidable but not rotatable threaded element accommodated in the receiving part which has been obliquely cut off at its upper end in order to adjoin the slanting lower part of the sleeve and which threaded element has been provided with a thread; and a bolt to be screwed into the threaded element, which extends upwards through the sleeve with ample clearance and which bolt rests with its head on the plate.

In fastening the bolt the threaded element is drawn upwards so that the upper part of the sleeve is urged against the plate. Due to their slanting ends, the sleeve and the threaded element are moved sideways relatively to each other and are tightly drawn against the walls of the receiving part. As a result a fixed connection is obtained between the tube screwed into the ground and the plate connected to the post by means of the coil spring.

An additional possibility is to provide the plate with, viewed in its operating position, downward flanged rims and with a length of tubing inserted in the same direction, which can be slid on to the receiving part connected to the tube.

According to another embodiment of the invention it can be provided that the plate that is part of the anchoring means is connected to a downward directed tube or bar, which in its turn is connected to a partition roughly parallel to the plate.

In general, said partition will have greater dimensions than the plate to which the coil spring has been secured and upon which the post rests. By filling the space between both plates with sand, a sufficiently firm anchoring of the post in the ground can be obtained so that extracting the post from the ground can be prevented.

When securing the post it is in this case necessary to dig a hole in the ground that must be large enough to be able to allow passage to the partition. Of course this entails more work, and therefore costs, than when use is made of the aforementioned tube that is screwed into the ground. In certain city areas, however, cables and pipes may be situated so close beneath the street and side-walk surfaces that the application of screwing the tube into the ground involves too high risks.

It has been found that in applying either anchoring means, the post can yield without causing damage to the anchoring means and the post. As a result, also the infliction of damage to a car accidentally colliding with it, is largely prevented.

When, however, attempts are made to run over the post with a car, such post will tilt so far that it is drawn with considerable force against the underside or any other part of the car. The possibility then exists that the car is blocked and cannot drive on or retire.

The invention will hereinafter be further explained, reference being made to the drawn embodiments, where:
Fig. 1 shows a cross-section and partial elevational view of a post with anchoring means in accordance with the invention;
Fig. 2 shows an enlarged detail of fig. 1; and
Fig. 3 shows a cross-section and partial elevational view of the post with a modified embodiment of the anchoring means.

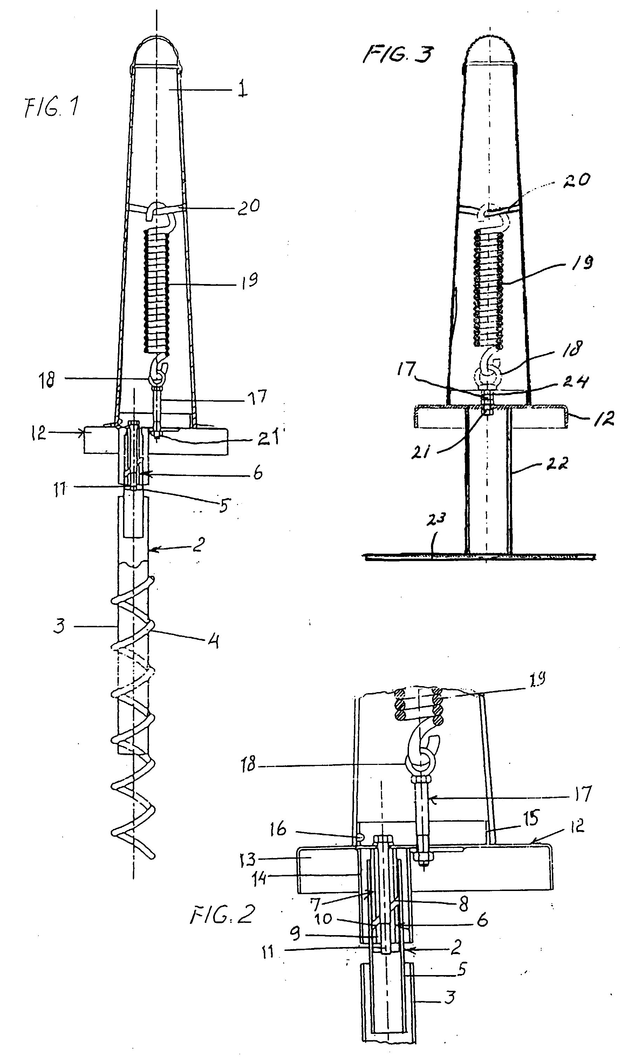

The post 1 shown in fig.1 has been provided with the anchoring means 2 comprising a tube 3 on which the rod 4 has been secured which has been helically wound such that some windings of the rod continue beneath the tube 3.

In the upper end of the tube 3 the receiving part 5 has been fixed, consisting of a square tube which has been affixed in the tube 3 by welding. As has been shown in particular in fig. 2, in the receiving part 5 a clamping piece 6 has been accommodated consisting of a sleeve 7 the lower end 8 of which has been obliquely cut off, a threaded element 9 the upper end 10 of which has been obliquely cut off and a bolt 11 that has been screwed into the threaded element 9.

The bolt 11 extends upwards and rests with its head on the plate 12 the rims 13 of which have been flanged downward. The plate 12 may for instance have the size of a paving-stone so that such a stone can be removed when securing the anchoring means in the ground.

On the undersurface of the plate 12 a length of tubing 14 has been attached which can slide over the receiving part 5 when positioning the plate 12. By means of the bolt 11 the sleeve 7 can be drawn against the plate 12, whereupon the slanting sides 8 and 10 are drawn against each other and the parts 7 and 9 are sideways pressed apart and against the walls of the receiving part 5. As a result the plate 12 is secured in relation to the tube 3.

On the upper surface of the plate 12 a ring-shaped rim 15 has been mounted which just fits inside the wall of the post 1. The rim 15 has been provided with a recess 16, so that upon slightly tilting the post 1 the bolt 11 can be turned.

On the upper surface of the plate 12 there is likewise a support 17 which may be in the form of a bolt the head of which has been provided with an eye 18. In the eye 18 the one end of a coil spring 19 has been inserted, the other end of which has been secured to a pin 20 which is located inside the post and is somewhat V-shaped so that the spring 19 seeks the lowest point. The nut 21 may, prior to placing the plate 12, be screwed upon the bolt 17 to such an extent that the ends of the spring 19 are just closely accommodated against the eye 18 and the pin 20.

In the position of the post 1, as shown in the drawing, the spring 19 is practically without tension. When, however, a lateral force is exerted on the post 1, the spring will resist the tilting of the post and will return the post to its original position when the force on the post is removed.

Fig. 3 shows the possibility of the plate 12 being provided with a downward extended tube 22 the lower end of which is connected to a partition 23 with greater dimensions than the plate 12, which in its turn will have approximately the size of a paving-stone.

The other parts applied correspond to those of the embodiment described hereinabove with reference to figs. 1 and 2. In this respect is should be pointed out that between the head of the bolt 17 and the plate 12 one or more washers 24 may be placed. The thickness of said washer or washers is selected such that with a tightened nut 21 the proper alignment of the ends of the coil spring 19 to the eye 18 and the pin 20 is obtained. In establishing the thickness of the washer or washers the tolerances in the dimensions of the various parts are allowed for.

It will be clear that only a few possible embodiments of the device according to the invention have been represented in the drawing and described hereinabove, and that many modifications may be made without falling outside the scope of the claims.

## Claims

1. Post (1) and means (2) to anchor it in the ground, for example to prevent the parking of vehicles, resilient means (19) being present between the anchoring means and the post (1) so that from the vertical position the post can bring about a certain angular displacement when a force in approximately horizontal direction is applied thereon, such as by a vehicle colliding with it, and the post will return from this position to its vertical position once the force on the post has been removed, **characterized in that** the post (1) has been made hollow and that within the post a coil spring (19) has been placed the upper end of which is anchored to the post and the lower end to a virtually horizontally oriented plate (12) that is part of the anchoring means (2), and which plate (12) has been provided with a standing rim (15) which has been fittingly inserted in the lower end of the post.

2. Post as claimed in claim 1, **characterized in that** use is made of a coil spring (19) the windings of which are accommodated close together and which allows for the windings still being adjoined in the mounted position of the post (1).

3. Post as claimed in claim 1 or 2 **characterized in that** the connection between the upper end of the spring (19) and the post (1) is achieved by a pin (20) transversely brought into the post (1), which has been grasped by an eye-part of the coil spring and which pin (20) has an approximate V-shape such that the spring will be drawn toward the centre of the V.

4. Post as claimed in any of the preceding claims **characterized in that**, the anchoring means (2) contains a tube (3), a rod (4) attached to the outside thereof and winded in a spring-coil shape, some windings of which continue below the lower end of the tube (3), a receiving part (5) mounted at the upper end of the tube for the sliding but not rotating accomodating of a clamping piece (6) that with its upper end can be drawn against the plate (12) by means of a bolt (11) and therewith is wedged in the receiving part (5).

5. Post as claimed in claim 4, **characterized in that** the upper end of the tube (3) is provided with a rectangular or square part (5) which can be grasped by a tool.

6. Post as claimed in any of the claims 4 - 6, **characterized in that** the rectangular part is obtained in that the receiving part (5) connected to the tube (3) is formed by a square tube the upper end of which projects above the tube (3).

7. Post as claimed in any of the claims 4 - 6, **characterized in that** the clamping piece (6) may be formed by: a sleeve (7) slidable in the receiving part (5), the upper end of which may adjoin the plate (12) and the lower end (8) has obliquely been cut off; a slidable but not rotatable threaded element (9) accommodated in the receiving part (5) which has been obliquely cut off at its upper end (10) in order to adjoin the slanting lower part (8) of the sleeve (7) and which threaded element has been provided with a thread; and a bolt (11) to be screwed into the threaded element (9), which extends upwards through the sleeve (7) with ample clearance and which bolt (11) rests with its head on the plate (12).

8. Post as claimed in any of the claims 1 - 3, **characterized in that** the plate (12) that is part of the anchoring means (2) is connected to a downward extended tube or bar (22), which in its turn is connected to a partition (23) roughly parallel to the plate.

## Patentansprüche

1. Strassenleitpfosten (1) und Mittel (2) zu deren Verankerung im Bodem zum Beispiel zum Sperren von Fahrzeugparken, wobei zwischen den Verankerungsmitteln und dem Pfosten (1) federelastische Elemente (19) anwesend sind sodass der Pfosten von der vertikalen Position aus eine bestimmte Winkelverdrehung ausführen kann wenn ein Kraft darauf in etwa horizontaler Richtung ausgeübt wird zum Beispiel bei einem Anfahren von einem Kraftfahrzeug und der Pfosten von dieser Position aus wieder in ihre Vertikallage zurückkehren will wenn der Kraft auf den Pfosten aufgehoben wird, **dadurch gekennzeichnet,** dass der Pfosten (1) hohl ausgeführt ist und dass in dem Pfosten eine Schraubfeder (19) angeordnet ist, dessen Oberteil am Pfosten verankert worden ist und das untere Ende an einer etwa horizontalen Platte (12), welche Teil der Verankerungsmittel (2) ist und welche Platte (12) mit einem nach oben ragenden Rand (15) versehen ist, welcher passend im unteren Ende des Pfostens aufgenommen ist.

2. Pfosten nach Anspruch 1, **dadurch gekennzeichnet,** dass Gebrauch von einer Schraubfeder (19) gemacht wird, deren Windungen dicht gegeneinander liegen und wobei auch in der montierten Lage des Pfostens (1) die Windungen noch gegeneinander liegen.

3. Pfosten nach Anspruch 1 oder 2, **dadurch gekennzeichnet,** dass die Verbindung zwischen dem oberen Ende der Feder (19) und dem Pfosten (1) bekommen wird durch einen quer in dem Pfosten (1) angeordneten Stab (20), welcher im einem Augenteil der Schraubfeder aufgenommen ist und welcher Stab (20) etwa V-förmig ist derart dass die Feder dem Punkt des V hinzugezogen werden wird.

4. Pfosten nach einem der voran gehenden Ansprüchen, **dadurch gekennzeichnet,** dass die Verankerungsmittel (2) einen Rohr (3) umfassen, einen auf deren Aussenseite befestigten schraubenlinienförmig gewickelten Stab (4), wovon einige Windungen unter das untere Ende des Rohres (3) hinausragen, einen am oberen Ende des Rohres angegeordneten Aufnahmeteil (5) für das verschiebbar sondern nicht drehbar Aufnehmen eines Klemmteils (6), der mit seinem oberen Ende mittels einem Bolzen (11) gegen die Platte (12) angezogen werden kann und dabei im Aufnahmeteil (5) festgeklemmt wird.

5. Pfosten nach Anspruch 4, **dadurch gekennzeichnet,** dass das obere Ende des Rohres (3) mit einem rechtwinkligen oder ob einem viereckigen Teil (5) versehen ist mit dem ein Gerät im Eingriff gebracht werden kann.

6. Pfosten nach einem der Ansprüchen 4-6, **dadurch gekennzeichnet,** dass der rechtwinklige Teil bekommen wird dadurch dass der mit dem Rohr (3) verbundene Aufnahmeteil (5) gebildet wird durch einen viereckigen Rohr dessen oberen Ende über den Rohr (3) hinaus steckt.

7. Pfosten nach einem der Ansprüchen 4-6, **dadurch gekennzeichnet,** dass der Klemmteil (6) gebildet wird durch: einem im Aufnahmeteil (5) verschiebaren Rohr (7) dessen oberen Ende gegen die Platte (12) anliegen kann und dessen unteren Ende (8) schräg abgeschnitten ist; einen verschiebar sondern nich drehbar im Aufnahmeteil (5) angeordneten Schraubteil (9), dessen oberen Ende (10) schräg abgeschnitten ist zur Anliegung gegen das schräge untere Ende (8) des Rohres (7) und welcher Schraubteil mit einem Schraubengewinde versehen ist; und einen im Schraubteil (9) zu drehenden Bolzen (11), welcher sich mit reichlichem Spiel den Rohr (7) hindurch erstreckt und welcher Bolzen (11) mit seinem Kopf auf der Platte ruht.

8. Pfosten nachem einem der Ansprüchen 1-3, **dadurch gekennzeichnet,** dass die Platte (12), welche Teil der Verankerungsmittel (2) ist, mit einem sich nach unten erstreckenden Rohr oder einer Stange (22) verbunden ist, welche an sich mit einer Scheidewand (23) verbunden ist, welche nahezu parallel der Platte läuft.

## Revendications

1. Poteau (1) et moyens (2) pour son ancrage dans le sol par exemple pour l'interdiction de stationnement de véhicules, des moyens élastiques (19) sont présents entre les moyens d'ancrage et le poteau (1), de sorte que à partir de la position verticale le poteau peut exécuter une certaine rotation angulaire si sur lequel une force est exercée dans une direction environ horizontale, comme par un véhicule entre en collision avec le poteau et à partir de cette position le poteau retournera à sa position verticale de nouveau si la force sur le potreau est levée, **caractérise en ce** que le poteau (1) est réalisé creux et dans le poteau une tige filetée (19) est placée, l'extrémité supérieure de cela est ancrée au poteau et l'extrémité inférieure à une plaque (12) s'oriente à peu près horizontale, laquelle est une partie des moyens d'ancrage (2) et ladite plaque (12) est prévue d'un bord souslevé (15), lequel est inseré ajusté dans l'extrémité inférieure du poteau.

2. Poteau selon la revendication 1, **caractérisé en ce** qu'une tige filetée (19) est utilisée dont les filets sont situés l'un contre l'autre et aussi dans la position montée du poteau (1) les filets sont encore situés l'un contre l'autre.

3. Poteau selon la revendication 1 ou 2, **caractérisé en ce** que la connexion entre l'extrémité supérieure de la tige (19) et le poteau (1) est obtenue par une cheville (20) montée transversalement dans le poteau (1), ladite cheville est entourée par un oeillet de la tige et quelle cheville (20) a environ une forme de V, tellement que la tige sera tirée au centre de V.

4. Poteau selon une des revendications précédentes, **caractérisé en ce** que les moyens d'ancrage (2) sont constitués d'un tube (3), d'une barre (4) attachée à son extérieur et enroulée hélicoïdale, quelques enroulements de cela continuent sous l'extrémité inférieure du tube (3), une partie de réception (5) montée à l'extrémité supérieure du tube à recevoir coulissant mais non rotable d'une pièce de serrage (6), quelle avec sa extrémité supérieure peut être tirer contre la plaque (12) au moyen d'un boulon (11) et avec cela est serré dans la partie de réception (5).

5. Poteau selon la revendication 5, **caractérisé en ce** que l'extrémité supérieure du tube (3) est prévue d'une partie rectangulaire ou carré (5) permettant la prise d'un outil.

6. Poteau selon une des revendication 4-6, **caractérisé en ce** que la partie rectangulaire peut être obtenue parce que la partie de réception (5) connectée au tube (3) est formée par un tube carré l'extrémité supérieure de cela s'étend au-dessus du tube (3).

7. Poteau selon une des revendications 4-6, **caractérisé en ce** que la pièce de serrage (6) est formée par: un élément tubelaire (7) coulissant dans la partie de réception (5), l'extrémité supérieure de cela peut toucher à la plaque (12) et l'extrémité inférieure (8) est coupée obliquement; un élément à vis (9) coulisant mais non rotatable monté dans la partie de réception (5), laquelle est coupée obliquement à sa extrémité supérieure (10) afin de toucher la partie inférieure de biais (8) de l'élément tubulaire (7) et quel élément à vis est prévu d'un filet; et un boulon (11) à être visser dans l'élément tubulaire avec ample jeu et lequel boulon (11) s'appuit avec son tête sur la plaque (12)

8. Poteau selon une des revendications 1-3, **caractérisé en ce** que la plaque (12) étant une partie des moyens d'ancrage (2) est connectée à un tube ou une barre (22) s'étendant en bas, lequel est connecté à son tour à une séparation (23) à peu près parallèlement à la plaque.
